# EUROPÄISCHE PATENTSCHRIFT

(11) **EP 1 286 933 B1**
(45) Veröffentlichungstag und Bekanntmachung des Hinweises auf die Patenterteilung: **15.09.2004**
(21) Anmeldenummer: 01947267.9
(22) Anmeldetag: 08.05.2001
(51) Int. Cl.: C04B 38/00

(54) **VERFAHREN ZUR HERSTELLUNG VON PORÖSEN ANORGANISCHEN FESTKÖRPERN AUS EINER WÄSSRIGEN KOMPOSITPARTIKELDISPERSION**
METHOD FOR PRODUCING POROUS INORGANIC SOLIDS ON THE BASIS OF AN AQUEOUS COMPOSITE PARTICLE DISPERSION
PROCEDE DE REALISATION DE CORPS MINERAUX SOLIDES POREUX A PARTIR D'UNE DISPERSION AQUEUSE DE PARTICULES COMPOSITES

(30) Priorität: 18.05.2000 DE 10024561
(43) Veröffentlichungstag der Anmeldung: 05.03.2003
(73) Patentinhaber: BASF AKTIENGESELLSCHAFT, 67056 Ludwigshafen (DE)
(72) Erfinder: XUE, Zhijian, 67063 Ludwigshafen (DE); WIESE, Harm, 69121 Heidelberg (DE)
(86) Internationale Anmeldenummer: PCT/EP2001/005196
(87) Internationale Veröffentlichungsnummer: WO 2001/087800

(56) Entgegenhaltungen:
- EP-A- 0 844 221
- EP-A- 0 864 362
- DE-A- 19 950 464
- US-A- 3 833 386
- US-A- 4 894 194
- US-A- 4 973 435

## Beschreibung

Die vorliegende Erfindung betrifft ein Verfahren zur Herstellung von porösen anorganischen Festkörpern aus einer wässrigen Dispersion von Partikeln, welche aus Polymerisat und feinteiligem anorganischen Feststoff aufgebaut sind. Ferner betrifft die vorliegende Erfindung die Verwendung der porösen anorganischen Festkörper.

Bei der Herstellung von porösen anorganischen Festkörpern unter Verwendung von wässrigen Polymerisatdispersionen ist von folgendem Stand der Technik auszugehen.

Die DE-A 196 39 016 offenbart ein Verfahren zur Herstellung von porösem Siliziumdioxid, bei dem aus Siliziumdioxidvorläufern in Gegenwart einer wässrigen Polymerisatdispersion mittels Sol-Gel-Chemie Siliziumdioxid ausgefällt wird, in dessen dreidimensionalem Netzwerk Polymerisatpartikel eingebaut sind. Diese werden in einem nachgeschalteten Prozeß durch Erhitzen aus der dreidimensionalen Raumstruktur entfernt.

Die Herstellung von porösem Calciumcarbonat wird von D. Walsh und S. Mann in Nature, 1995, 377, Seiten 320 bis 323, beschrieben. Ausgehend von einer übersättigten Calciumhydrogencarbonat-Lösung wird Calciumhydrogencarbonat in Anwesenheit einer Öl in Wasser-Mikroemulsion gefällt. Durch vorsichtiges Erhitzen des ausgefallenen Calciumhydrogencarbonats wird dieses durch Abspaltung von Wasser und Kohlendioxid in Calciumcarbonat umgewandelt und dabei gleichzeitig die organische Phase aus dem Festkörper entfernt.

Ein weiteres Verfahren zur Herstellung von porösen Festkörpern wird von A. Imhof und D.J. Pine in Nature, 1987, 389, Seiten 948 bis 951, beschrieben. Offenbart wird die Ausbildung einer porösen dreidimensionalen Raumstruktur durch Ausfällung anorganischer Feststoffe mittels eines Sol-Gel-Prozesses, welcher in Anwesenheit einer monodispersen Öl in Wasser-Emulsion erfolgt. Nach Trocknung und Kalzination verbleibt ein poröser anorganischer Festkörper.

B.T. Holland et al. (siehe Science 1998, 281, Seiten 538 bis 540) beschreiben die Herstellung poröser Titandioxid-, Zirkondioxid und Aluminiumoxid-Festkörper aus den entsprechenden Metallalkoxid-Vorstufen in Gegenwart geordneter Polymerisatpartikel. Nach Aufbringen der Metallalkoxide auf die Oberfläche der festen Polymerisatpartikel wird eine poröse anorganische Struktur durch Verbrennen des organischen Materials während des Erhitzens erhalten.

Von G. Subramanian et al. werden in Adv. Mat. 1999, 11(15), Seiten 1261 bis 1265, poröse anorganische Festkörper offenbart, welche durch Trockung und Sintern von Mischungen aus Polymerisatteilchen und ultrafeinen Metalloxidpartikeln, zugänglich sind.

Im Stand der Technik findet sich ferner eine Reihe von Verfahren, welche das Erhitzen von mit feinteiligen anorganischen Teilchen beschichteten Polymerisatpartikeln umfassen, bei denen aber keine porösen anorganischen Festkörper, sondern kleine anorganische Hohlkugeln gebildet werden. Beispiele hierfür finden sich in H. Bamnolker et al. in J. Mat. Sci. Lett. 1997, 16, Seiten 1412 bis 1415, N. Kawahashi und E. Matijevic in J. Colloid and Interf. Sci. 1990, 138, Seiten 534 bis 542, N. Kawahashi und E. Matijevic in J. Colloid and Interf. Sci. 1991, 143, Seiten 103 bis 110, N. Kawahashi und E. Matijevic in J. Mater. Chem. 1991, 1(4), Seiten 577 bis 582, F. Caruso et al. in Science 1998, 281, Seiten 1111 bis 1114, F. Caruso et al. in J. Am. Chem. Soc. 1998, 120, Seiten 8523 bis 8524 sowie F. Caruso et al. in Adv. Mater. 1999, 11(11), Seiten 950 bis 952. Generell werden bei diesen Herstellverfahren Polymerisatpartikel mit einer hohen Glasübergangstemperatur mit anorganischen Feststoffen beschichtet. Anschließend werden die beschichteten Polymerisatpartikel erhitzt, wobei das Polymerisat in gasförmige Bestandteile umgewandelt wird und anorganische Hohlkugeln mit einem Durchmesser von wenigen Mikrometern verbleiben.

Aufgabe der vorliegenden Erfindung war es, angesichts des vorstehenden Standes der Technik ein neues Verfahren zur Herstellung von porösen anorganischen Festkörpern zur Verfügung zu stellen, welches allgemein anwendbar ist und nicht die Limitierung der Sol-Gel-Verfahren aufweist.

Demgemäß wird ein Verfahren zur Herstellung von porösen anorganischen Festkörpern aus einer wässrigen Dispersion von Partikeln, welche aus Polymerisat und feinteiligem anorganischen Feststoff aufgebaut sind, zur Verfügung gestellt, das dadurch gekennzeichnet ist, daß
a) die wässrige Dispersion in eine offene Form gefüllt oder auf eine Fläche aufgebracht wird, anschließend
b) die wässrige Dispersion bei einer Temperatur gleich oder größer ihrer Mindestfilmbildetemperatur getrocknet wird und anschließend
c) der gebildete Film aus Polymerisat und anorganischem Feststoff auf erhöhte Temperatur gebracht und das Polymerisat zu gasförmigen Bestandteilen umgesetzt wird.

Wässrige Dispersionen von Partikeln, welche aus Polymerisat und feinteiligem anorganischen Feststoff aufgebaut sind (Kompositpartikel), sind allgemein bekannt. Es handelt sich um fluide Systeme, die als disperse Phase in wässrigem Dispergiermedium aus mehreren ineinander verschlungenen Polymerisatketten bestehenden Polymerisatknäuel, die sogenannte Polymermatrix, und feinteiligem anorganischen Feststoff aufgebaute Partikel in disperser Verteilung befindlich enthalten. Die Herstellung solcher Kompositpartikeldispersionen findet sich beispielsweise in den vom Anmelder unter den Aktenzeichen 19942777.1 und 19950464.4 beim Deutschen Patent- und Markenamt eingereichten Anmeldungen sowie den darin zitierten Literaturstellen.

Die erfindungsgemäß in Form einer wässrigen Dispersion einsetzbaren Kompositpartikel können als feinteilige anorganische Feststoffe prinzipiell Metalle, Metallverbindungen, wie Metalloxide und Metallsalze, aber auch Halbmetallverbindungen enthalten. Als feinteilige Metallpulver können Edelmetallkolloide, wie beispielsweise Palladium, Silber, Ruthenium, Platin, Gold und Rhodium sowie diese enthaltende Legierungen Verwendung finden. Als feinteilige Metalloxide beispielhaft genannt seien Titandioxid (beispielsweise kommerziell verfügbar als Hombitec®-Marken der Firma Sachtleben Chemie GmbH), Zirkonium-(IV)-oxid, Zinn-(II)-oxid, Zinn-(IV)-oxid (beispielsweise kommerziell verfügbar als Nyacol® SN-Marken der Firma Akzo-Nobel), Aluminiumoxid (beispielsweise kommerziell verfügbar als Nyacol® AL-Marken der Firma Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Firma Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Firma Akzo-Nobel), Cer-(IV)-oxid (beispielsweise kommerziell verfügbar als Nyacol® CEO2-Marken der Firma Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Firma Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze können prinzipiell Bestandteil der erfindungsgemäß einsetzbaren Kompositpartikel sein: Sulfide, wie Eisen-(II)-sulfid, Eisen-(III)-sulfid, Eisen- (II) -disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthosilikat, Eisen-(II)-orthosilikat, Eisen-(III)-orthosilikat, Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der Südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat. Als wesentliche Halbmetallverbindung sei amorphes und/oder in unterschiedlichen Kristallstrukturen vorliegendes Siliziumdioxid genannt.

Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid. Insbesondere bevorzugt sind Siliziumdioxid, Aluminiumoxid, Hydroxyaluminiumoxid, Calciumcarbonat, Magnesiumcarbonat, Calciumorthophosphat, Hydroxylapatit und Titandioxid.

Günstig ist es, wenn die in den Kompositpartikeln enthaltenen feinteiligen anorganischen Feststoffe einen gewichtsmittleren Teilchendurchmesser von ≤ 100 nm aufweisen. Erfolgreich werden solche feinteiligen anorganischen Feststoffe in Kompositpartikeln verwendet, deren in einem wässrigen Medium dispergierte Teilchen einen gewichtsmittleren Teilchendurchmesser ≥ 1 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Die Ermittlung der gewichtsmittleren Teilchendurchmesser kann beispielsweise über die Methode der Analytischen Ultrazentrifuge erfolgen (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175).

Häufig enthalten die wässrigen Kompositpartikeldispersionen Dispergiermittel, die beispielsweise bei deren Herstellung mittels radikalisch wässriger Emulsionspolymerisation sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikeldispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208. Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol® A-Marken (C₁₂C₁₄-Fettalkoholethoxilate, EO-Grad: 3 bis 8), Lutensol® AO-Marken (C₁₃C₁₅-Oxoalkoholethoxilate, EO-Grad: 3 bis 30), Lutensol® AT-Marken (C₁₆C₁₈-Fettalkoholethoxilate, EO-Grad: 11 bis 80), Lutensol® ON-Marken (C₁₀-Oxoalkoholethoxilate, EO-Grad: 3 bis 11) und die Lutensol® TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel I 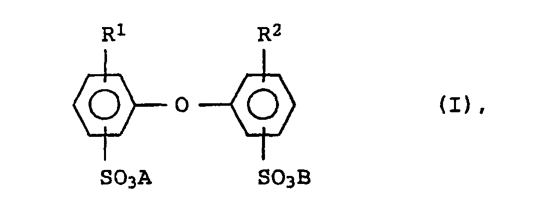 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen C₆bis C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid, ethoxyliertes Talgfettalkyl-N-methylammoniumbromid (beispielsweise das Ethoquad® HT/25 der Firma Akzo-Nobel; ca. 15 Ethylenoxideinheiten) und ethoxyliertes Oleylamin (beispielsweise Uniperol® AC der Firma BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Die wässrigen Kompositpartikeldispersionen enthalten in der Regel 0,05 bis 20 Gew.-%, häufig 0,1 bis 5 Gew.-%, oft 0,2 bis 3 Gew.-% an Dispergiermittel, jeweils bezogen auf die Gesamtmenge der Kompositpartikel.

Das einen Bestandteil der Kompositpartikel bildende Polymerisat kann prinzipiell durch eine radikalische oder soweit möglich auch durch eine anionische bzw. kationische Polymerisation von ethylenisch ungesättigten Monomeren gebildet werden. Sowohl die radikalische als auch die ionische Polymerisation sind dem Fachmann als übliche Polymerisationsmethoden bekannt.

Die radikalische Polymerisation kann beispielsweise in Lösung, beispielsweise in Wasser oder einem organischen Lösungsmittel (Lösungspolymerisation) in wässriger Dispersion (Emulsionspolymerisation oder Suspensionspolymerisation) oder in Masse, d.h. im wesentlichen in Abwesentheit von Wasser oder organischen Lösungsmitteln (Massepolymerisation) durchgeführt werden.

Das einen Bestandteil der Kompositpartikel bildende Polymerisat wird jedoch vorteilhaft durch radikalisch initiierte wässrige Emulsionspolymerisation hergestellt. Diese ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2^{nd} Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Sie erfolgt üblicherweise so, daß man die ethylenisch ungesättigten Monomeren, häufig unter Mitverwendung von Dispergiermitteln, in wässrigem Medium dispers verteilt und mittels wenigstens eines radikalischen Polymerisationsinitiators polymerisiert. Von dieser Verfahrensweise unterscheidet sich die Herstellung von Kompositpartikeln oft lediglich dadurch, daß die Emulsionspolymerisation im Beisein von einem feinteiligen anorganischen Feststoff stattfindet.

Das Polymerisat ist aus ethylenisch ungesättigten Monomeren in einpolymerisierter Form aufgebaut. Verwendung als Monomere finden beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsauren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien und Isopren. Die genannten Monomere bilden in der Regel die Hauptmonomeren, die, bezogen auf das Polymerisat, einen Anteil von mehr als 80 Gew.-%, bevorzugt mehr als 90 Gew.-% auf sich vereinen. In aller Regel weisen diese Monomeren in Wasser bei Normalbedingungen [20°C, 1 bar (absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenischungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren lediglich als modifizierende Monomere in Mengen, bezogen auf das Polymerisat, von weniger als 10 Gew.-%, bevorzugt weniger als 5 Gew.-% einpolymerisiert.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig sind die vorgenannten Monomeren in Mengen von bis 10 zu Gew.-%, bevorzugt jedoch weniger als 5 Gew.-% im Polymerisat in einpolymerisierter Form enthalten.

Besonders günstig ist es, wenn das Polymerisat zu wenigstens 50 Gew.-%, bevorzugt zu wenigstens 90 Gew.-% und insbesondere zu wenigstens 95 Gew.-% aus wenigstens einem Monomeren der folgenden Gruppe in einpolymerisierter Form aufgebaut ist: Ester aus Vinylalkohol und 1 bis 10 C-Atome aufweisenden Monocarbonsäuren, Ester aus Acrylsäure, Methacrylsäure, Maleinsäure und Fumarsäure mit einem 1 bis 10 C-Atome aufweisenden Alkohol, vinylaromatisches Monomer und/oder α,β-ungesättigtes C₃- oder C₄-Carbonsäurenitril oder α,β-ungesättigtes C₄- bis C₆-Carbonsäuredinitril.

Die erfindungsgemäß einsetzbaren Kompositpartikel besitzen in der Regel Teilchendurchmesser von ≤ 5000 nm, häufig ≤ 1500 nm und oft ≤ 400 nm. Günstig ist es, wenn die Kompositpartikel einen Teilchendurchmesser von ≥ 50 und ≤ 800 nm oder ≥ 100 und ≤ 600 nm aufweisen. Die Bestimmung der Teilchendurchmesser erfolgt üblicherweise durch transmissionselektronenmikroskopische Messungen (vgl. z.B. L. Reimer, Transmission Electron Microscopy, Springer-Verlag, Berlin, Heidelberg, 1989; D.C. Joy, The Basic Principles of EELS in Principles of Analytical Electron Microskopy, herausgegeben von D.C. Joy, A.D. Romig, Jr. und J.I. Goldstein, Plenum Press, New York, 1986; L.C. Sawyer und D.T. Grupp, Polymer Microscopy, Chapman and Hall, London, 1987).

In den Kompositpartikeln beträgt das Gewichtsverhältnis zwischen Polymerisat und feinteiligem anorganischen Feststoff in der Regel von 90 zu 10 bis 20 zu 80, häufig von 85 zu 15 bis 30 zu 70 und oft von 80 zu 20 bis 40 zu 60.

Die im erfindungsgemäßen Verfahren einsetzbaren Kompositpartikel können unterschiedliche Strukturen aufweisen. Die Kompositpartikel enthalten in der Regel mehrere der anorganischen Feststoffteilchen. Die anorganischen Feststoffteilchen können vollständig vom Polymerisat umhüllt sein. Es ist aber auch möglich, daß ein Teil der anorganischen Feststoffteilchen vom Polymerisat umhüllt ist, während ein anderer Teil auf der Oberfläche des Polymerisats angeordnet ist. Selbstverständlich ist es auch möglich, daß ein Großteil der anorganischen Feststoffteilchen auf der Oberfläche des Polymerisats gebunden ist. Bevorzugt werden solche Kompositpartikel verwendet, deren anorganische Feststoffteilchen zu ≥ 50 Gew.-%, ≥ 60 Gew.-%, ≥ 70 Gew.-%, ≥ 80 Gew.-% oder ≥ 90 Gew.-% und alle Werte dazwischen, jeweils bezogen auf die Gesamtmenge der in den Kompositpartikeln enthaltenen anorganischen Feststoffteilchen, auf der Oberfläche des Polymerisats angeordnet sind.

Der Gehalt an Kompositpartikeln in der erfindungsgemäß verwendeten wässrigen Kompositpartikeldispersion liegt in der Regel zwischen ≥ 1 und ≤ 80 Gew.-%, häufig zwischen ≥ 5 und ≤ 70 Gew.-% und oft zwischen ≥ 10 und ≤ 60 Gew.-%.

Zur Herstellung der porösen anorganischen Festkörper wird die Kompositpartikeldispersion zuerst in eine offene Form gefüllt oder auf eine Fläche aufgebracht.

Unter offener Form wird in diesem Zusammenhang verstanden, wenn sie einen Boden und mit diesem verbundene, in sich geschlossene Seitenwände aufweist. Der Boden kann eben oder in sich strukturiert sein und prinzipiell jede gewünschte Form oder Größe einnehmen. Wichtig ist jedoch, daß der Boden mit in sich geschlossenen Seitenwänden versehen ist. Da die offene Form häufig die Negativform des während des erfindungsgemäßen Prozesses zugänglichen porösen anorganischen Festkörpers darstellt, wird sie üblicherweise entsprechend der gewünschten Form des porösen anorganischen Festkörpers gewählt. Das Material der Form wird üblicherweise so gewählt, daß es gegenüber dem in den Kompositpartikeln enthaltenen anorganischen Feststoff inert ist und so ein Herausnehmen des porösen anorganischen Festkörpers am Prozeßende problemlos möglich ist. Beispiele für formgebende Materialen sind Edelstähle, Edelmetalle oder hochschmelzende Keramikwerkstoffe. Prinzipiell ist es jedoch auch möglich, den nach dem Trocknen erhaltenen Film aus der Form herauszunehmen und diesen durch Schneiden mit einem scharfkantigen Gegenstand, wie beispielsweise Messer, Schere, Stanzformen etc., in die gewünschte Form zu bringen. In diesem Fall kann die Form beispielsweise aus Polyethylen, Polypropylen, Polystyrol, Teflon, Silikonkautschuk, Glas oder unterschiedlichen Edelstählen bestehen.

Unter Fläche wird eine Teil- oder die Gesamtoberfläche eines beliebigen dreidimensionalen Körpers verstanden. Beispiele für derartige dreidimensionale Körper sind Ringe in beliebiger Größe, Kugeln in beliebiger Größe, Zylinder in beliebiger Größe sowie mit unterschiedlichen Breiten/Längen-Verhältnissen oder Hohlzylinder in beliebiger Größe sowie mit unterschiedlichen Breiten/Längen-Verhältnissen aber auch Waben- und Netzstrukturen in verschiedenen Größen und geometrischen Ausgestaltungen. Als Materialien für die genannten dreidimensionalen Körper eignen sich insbesondere Edelmetalle sowie Metall- und Halbmetalloxide, wie beispielsweise Siliziumdioxid, Aluminiumoxid, Cerdioxid, Zinndioxid, Zirkoniumdioxid und Titandioxid.

Verfahrenswesentlich ist, daß die wässrige Kompositpartikeldispersion in der offenen Form oder auf der Fläche bei einer Temperatur getrocknet wird, die gleich oder größer der Mindestfilmbildetemperatur der Kompositpartikeldispersion ist. Die Trocknung kann unter Inertgas- oder Luftatmosphäre erfolgen. Besonders günstig ist es, wenn die relative Inertgas- oder Luftfeuchtigkeit über der wässrigen Kompositpartikeldispersion während des Trokkenvorgangs ≤ 50 % beträgt. Die Trockungstemperatur wird üblicherweise so gewählt, daß sie ≥ 1°C, ≥ 5°C, ≥10°C, ≥ 15°C oder noch höhere Werte über der Mindestfilmbildetemperatur der Kompositpartikeldispersion liegt. Die für den Trocknungsvorgang erforderliche Zeitdauer ist u.a. abhängig von der gewählten Temperatur, der relativen Inertgas- oder Luftfeuchtigkeit und der Filmschichtdicke. Sie kann von wenigen Minuten bis zu mehreren Tagen betragen. Die Trockungsdauer beträgt routinemäßig häufig 24 Stunden oder 36 Stunden oder 48 Stunden oder kann vom Fachmann in einfachen Vorversuchen exakt ermittelt werden.

Für das erfindungsgemäße Verfahren werden insbesondere solche wässrigen Dispersionen von Kompositpartikeln eingesetzt, deren Mindestfilmbildetemperatur < 100°C bevorzugt ≤ 50°C und besonders bevorzugt ≤ 30°C ist. Da die Mindestfilmbildetemperatur unterhalb 0°C nicht mehr meßbar ist, kann die untere Grenze der Mindestfilmbildetemperatur nur durch die Glasübergangstemperatur des Polymerisats angegeben werden. Die Glasübergangstemperaturen sollten dabei -60°C, vorzugsweise -30°C, nicht unterschreiten. Die Bestimmung der Mindestfilmbildetemperatur erfolgt nach DIN 53 787 bzw. ISO 2115 und die Bestimmung der Glasübergangstemperatur nach DIN 53 765 (Differential Scanning Calorimetry, 20 K/min, midpoint-Meßung).

Der Trocknungsprozeß kann prinzipiell bei Atmosphärendruck (1 bar absolut), im Unterdruck (< 1 bar absolut) und im Überdruck (> 1 bar absolut) in einem Druckbereich von 10 mbar bis 100 bar (absolut) erfolgen. Häufig erfolgt die Trocknung jedoch bei Atmosphärendruck. Beträgt die Mindestfilmbildetemperatur des Polymerisats ≥ 100°C ist es ratsam, den Trocknungsprozeß im Überdruck, beispielsweise bei 1,5 bar, 2 bar, 3 bar (absolut) oder noch höheren Drücken durchzuführen.

Die Dicke des Films aus Polymerisat und anorganischem Feststoff kann bis zu 10 mm betragen. Üblich sind jedoch Filmdicken ≤ 5 mm, ≤ 4 mm, ≤ 3 mm, ≤ 2 mm, ≤ 1 mm, ≤ 0,5 mm, ≤ 0,1 mm und ≥ 0,01 mm sowie alle Werte dazwischen. Speziell bei größeren Schichtdicken kann es ratsam sein, daß die Herstellung stufenweise erfolgt, d.h. es wird zuerst eine dünne Schicht der wässrigen Kompositpartikeldispersion in die Form gefüllt oder auf die Fläche aufgetragen und wie oben angegeben getrocknet. Dieser Vorgang wird dann sooft wiederholt, bis die gewünschte Filmschichtdicke erreicht ist.

Nach der Trocknung wird der gebildete Film auf erhöhte Temperatur gebracht und das Polymerisat zu gasförmigen Bestandteilen umgesetzt. Abhängig von der Art des feinteiligen anorganischen Feststoffs und des Materials der Form bzw. des die Fläche bildenden dreidimensionalen Körpers erfolgt eine Erhitzung auf Temperaturen bis zu 1000°C. Auch das Aufheizen auf noch höhere Temperaturen ist denkbar, wird jedoch nur in Ausnahmefällen angewandt. Üblicherweise wird der Film auf eine Temperatur ≥ 350°C und ≤ 700°C aufgeheizt. In der Regel wird die Temperatur gewählt, bei der der feinteilige anorganische Feststoff zu sintern beginnt. Diese Temperatur ist dem Fachmann bekannt oder kann von ihm in einfachen vorversuchen ermittelt werden.

Günstig ist es, wenn der Film mit einer Heizrate ≥ 0,1 und ≤ 50°C, bevorzugt ≥ 2 und ≤ 20°C aufgeheizt wird. Prinzipiell sind jedoch auch andere Heizraten möglich. Während des Aufheizens können auch unterschiedliche Heizraten, beispielsweise in einer Rampenfahrweise, angewendet werden.

Ist die erhöhte Temperatur erreicht, wird der Film solange bei dieser Temperatur belassen, bis sich das organische Polymerisat vollständig in gasförmige Bestandteile umgesetzt hat und der verbleibende feinteilige anorganische Feststoff einen porösen anorganischen Festkörper bildet. Die erforderliche Zeitdauer kann von wenigen Minuten bis zu mehreren Tagen betragen. Üblicherweise beträgt die Zeitdauer 0,5 bis 20 Stunden, bevorzugt 2 bis 8 Stunden. Das Aufheizen und die Umwandlung des Polymerisats in gasförmige Bestandteile bei erhöhter Temperatur kann prinzipiell bei Atmosphärendruck (1 bar absolut), im Unterdruck (< 1 bar absolut) und im Überdruck (> 1 bar absolut) in einem Druckbereich von 10 mbar bis 100 bar (absolut) erfolgen. Häufig erfolgt der Heizvorgang jedoch bei Atmosphärendruck.

Das Aufheizen und das Halten auf erhöhter Temperatur kann unter Inertgas aber auch unter sauerstoffhaltiger Atmosphäre erfolgen. Als Inertgase werden beispielsweise Helium, Argon, Stickstoff oder Kohlendioxid eingesetzt. Diese Inertgase können in beliebigen Verhältnissen mit Sauerstoff gemischt werden. Bevorzugt wird häufig Luft als sauerstoffhaltiges Gas eingesetzt. Selbstverständlich ist es auch möglich, inertgasfreien Sauerstoff, gegebenenfalls im Unterdruck, einzusetzen. Häufig ist es günstig, wenn das Aufheizen oder das Halten auf erhöhter Temperatur zuerst unter Inertgasatmosphäre erfolgt und das Inertgas dann nach und nach mit Sauerstoff angereichert wird, was beispielsweise durch Mischen mit Luft oder Sauerstoff geschehen kann. Selbstverständlich kann auch zuerst mit einem Inertgas gearbeitet werden, welches dann kontinuierlich durch Sauerstoff ersetzt wird.

Die nach der Abkühlung erhaltenen porösen anorganischen Festkörper zeichnen sich durch eine hohe Porosität aus. Von Bedeutung ist jedoch, daß während der thermischen Behandlung des Films aus Polymerisat und anorganischem Feststoff eine geringe Schrumpfung eintreten kann, so daß der poröse anorganische Festkörper gegenüber der ursprünglichen Ausdehnung des Films verkleinert ist. Dabei bleiben aber in der Regel die Proportionen (d.h. das Verhältnis von Länge/Breite/Höhe) erhalten. Im allgemeinen beträgt die Schrumpfung jedoch ≤ 20 %, ≤ 15 % oder ≤ 10 %, jeweils bezogen auf die ursprünglichen Ausdehnungen des Films.

Die durch das erfindungsgemäße Verfahren zugänglichen porösen anorganischen Festkörper sind vielfältig einsetzbar, insbesondere als Katalysatorträger, als Membran zur Trennung mehrphasiger Stoffgemische, insbesondere zur Abtrennung von Feststoffen aus Flüssigkeiten in chemischen Produktionsprozessen, in der Abwasseraufbereitung und in biotechnologischen Prozessen, als Adsorbens, insbesondere zur Abtrennung von Substanzen aus flüssigen Stoffgemischen, beispielsweise in der Lebensmittelindustrie zur Abtrennung von Proteinen aus Bier, als wärme- und/oder schalldämmendes Material sowie als leichter Konstruktionswerkstoff in der Bau-, Elektronik- und Mikroelektronikindustrie sowie als Träger- bzw. Trennmaterial in der Flüssigkeitschromatographie.

### Beispiele

Für die folgenden Beispiele wurde als feinteiliger anorganischer Feststoff Siliziumdioxid, und Zinn-(IV)-oxid verwendet. Exemplarisch wurden die kommerziell verfügbaren Sole Nyacol® 2040 [Siliziumdioxid (20 nm)] und Nyacol® SN 15 [Zinn-(IV)-oxid (10 bis 15 nm) der Firma Akzo Nobel eingesetzt. Die in runden Klammern angegebenen Werte entsprechen den Durchmessern der jeweiligen anorganischen Feststoffteilchen nach Herstellerangaben.

### 1. Beispiel

### 1.1 Herstellen einer wässrigen Kompositpartikeldispersion

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wässrige Phase mit 1,62 g 1 M Salzsäure auf einen pH-Wert von 2,5 ein und füllte sie mit entionisiertem und sauerstoff freiem Wasser, das mit 1 M Salzsäure auf einen pH-Wert von 2,5 eingestellt worden war, auf 100 g auf. Danach heizte man das Reaktionsgemisch auf eine Reaktionstemperatur von 85°C auf. Der pH-Wert dieser wässrigen Phase, gemessen bei Raumtemperatur, betrug 2,5.

Parallel stellte man eine wässrige Emulsion, bestehend aus 10 g Methylmethacrylat, 10 g 2-Ethylhexylacrylat, 80 g entionisiertem und sauerstofffreiem Wasser, 1 g einer 20 gew.-%igen wässrigen Lösung des nichtionischen Emulgators Lutensol® AT18 sowie 0,05 g 4-Vinylpyridin her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,1 Gew.-%, bezogen auf das Gesamtgewicht der wässrigen Kompositpartikeldispersion, auf. Das Vorliegen von himbeerförmigen Kompositpartikeln mit einem Durchmesser von etwa 220 nm wurde mittels transmissionselektronenmikroskopischer Untersuchungen nachgewiesen. Freie Siliziumdioxidteilchen ließen sich praktisch nicht nachweisen.

### 1.2 Herstellen des porösen anorganischen Festkörpers

8 g der unter Punkt 1.1 erhaltenen wässrigen Dispersion wurden in eine Polyethylenschale mit einem Durchmesser von etwa 5 cm gegossen. Die Naßschichtdicke betrug ca. 4 mm. Die wässrige Kompositpartikeldispersion trocknete man 24 Stunden bei 20°C und einer relativen Luftfeuchtigkeit von 50 %. Dabei wurde ein zusammenhängender Film erhalten. Die Mindestfilmbildetemperatur wurde generell nach ISO 2115 mit einem Temperaturgradientenofen Thermostair® der Firma Coesfeld Materialtest GmbH, Dortmund, bestimmt. Im vorliegenden Beispiel betrug sie 7°C.

Von diesem Film wurde ein ca. 10 mg schweres Stück herausgeschnitten und mittels einer Apparatur, bestehend aus einem Mettler® TA 4000 System mit einer M3-Waage der Firma Mettler, Gießen, Deutschland, thermogravimetrisch untersucht. Dabei erhitzte man die Probe mit einer Heizrate von 10°C/min unter Stickstoff von 20°C auf 550°C und unter Luftatmosphäre weiter auf 900°C. Das Polymer zersetzte sich ab einer Temperatur von ca. 390°C, wobei die Probe 68,5 Gew.-% ihres ursprünglichen Gewichts verlor. Ein zweiter Gewichtsverlust von 1,4 Gew.-%, ebenfalls bezogen auf das urspüngliche Probengewicht, trat ab ca. 555 °C nach der Zufuhr von Luft in die Probenkammer auf. Der Gesamtgewichtsverlust in Höhe von 69,9 Gew.-% entspricht in guter Annäherung dem theoretischen Copolymerisatanteil vom 70 Gew.-% der Kompositpartikel. Nach dem Abkühlen wurde ein weißer anorganischer Festkörper erhalten.

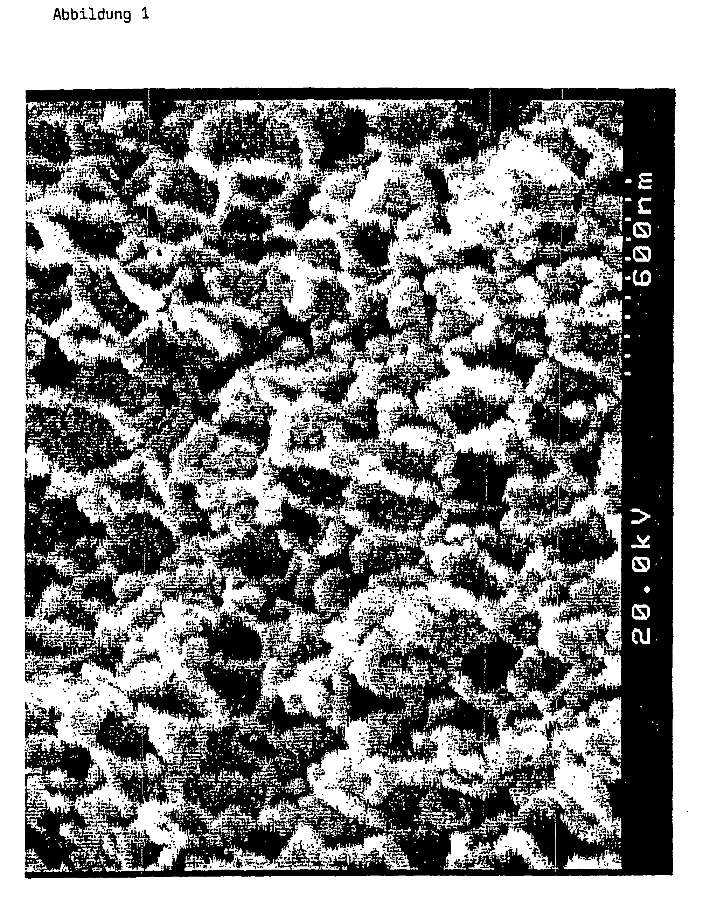

Der erhaltene Festkörper wurde gebrochen und die Bruchfläche mittels eines Rasterelektronenmikroskops untersucht. In Abbildung 1 ist ein dreidimensionales Netzwerk aus Siliziumdioxidteilchen und Hohlräumen zu erkennen. Die Durchmesser der Hohlräume beträgt etwa 100 bis 300 nm.

In einem weiteren Versuch wurde aus dem oben erhaltenen Film ein rechteckiges Stück von 3 cm Länge und 2 cm Breite herausgeschnitten. In einem temperaturkontrollierten Ofen (in allen Beispielen wurde ein Nabatherm® C8 der Firma Nabatherm, Bremen, verwendet) wurde dieses Filmstück in einer Luftatmosphäre innerhalb von 2 Stunden von 20°C auf 600°C aufgeheizt und eine Stunde bei dieser Temperatur belassen. Nach Abkühlung auf Raumtemperatur erhielt man einen rechteckigen weißen porösen Körper, dessen Kantenlängen ca. 2,7 cm und 1,8 cm betrugen.

Auf den erhaltenen Feststoff wurde mit einer Pipette ein Tropfen entionisiertes Wasser aufgetragen. Binnen Sekunden drang das Wasser in den porösen Feststoff ein und erhöhte an der Eindringstelle die Transparenz des weißen Feststoffs bis zu einem milchglasartigen Durchscheinen.

### 2. Beispiel

### 2.1 Herstellen einer wässrigen Kompositpartikeldispersion

In einem 500 ml Vierhalskolben wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wässrige Phase mit 1,62 g 1 M Salzsäure auf einen pH-Wert von 2,5 ein und füllte sie mit Wasser, das mit 1 M Salzsäure auf einen pH-Wert von 2,5 eingestellt worden war, auf 100 g auf. Danach heizte man das Reaktionsgemisch auf eine Reaktionstemperatur von 75°C auf. Der pH-Wert dieser wässrigen Phase, gemessen bei Raumtemperatur, betrug 2,5.

Parallel stellte man eine wässrige Emulsion, bestehend aus 10 g Styrol, 10 g n-Butylacrylat, 80 g entionisiertem und sauerstofffreiem Wasser, 1 g einer 20 gew.-%igen wässrigen Lösung des nichtionischen Emulgators Lutensol® AT18 sowie 0,05 g 4-Vinylpyridin her (Zulauf 1). Eine Initiatorlösung wurde aus 0,23 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 11,1 Gew.-%, bezogen auf das Gesamtgewicht der wässrigen Kompositpartikeldispersion, auf. Das Vorliegen von himbeerförmigen Kompositpartikeln mit einem Durchmesser von etwa 220 nm wurde mittels transmissionselektronenmikroskopischer Untersuchungen nachgewiesen. Freie Siliziumdioxidteilchen ließen sich praktisch nicht nachweisen.

### 2.2 Herstellen des porösen anorganischen Festkörpers

8 g der unter Punkt 2.1 erhaltenen wässrigen Dispersion wurden in eine Polyethylenschale mit einem Durchmesser von etwa 5 cm gegossen. Die Naßschichtdicke betrug ca. 4 mm. Die wässrige Kompositpartikeldispersion trocknete man 24 Stunden bei 20°C und einer relativen Luftfeuchtigkeit von 50 %. Dabei wurde ein zusammenhängender Film erhalten. Die Mindestfilmbildetemperatur wurde zu 17°C bestimmt.

Aus dem erhaltenen Film wurde ein rechteckiges Stück von 3 cm Länge und 2 cm Breite herausgeschnitten. In einem temperaturkontrollierten Ofen wurde dieses Filmstück in einer Luftatmosphäre innerhalb von 2 Stunden von 20°C auf 600°C aufgeheizt und eine Stunde bei dieser Temperatur belassen. Nach Abkühlung auf Raumtemperatur erhielt man einen rechteckigen weißen porösen Körper, dessen Kantenlängen ca. 2,7 cm und 1,8 cm betrugen.

### 3. Beispiel

### 3.1 Herstellen einer wässrigen Kompositpartikeldispersion

In einem 500 ml Vierhalskolben, ausgerüstet mit einem Rückflußkühler, einem Thermometer, einem mechanischem Rührer sowie einer Dosiervorrichtung, wurden unter Stickstoffatmosphäre bei 20°C und 1 bar (absolut) 60 g entionisiertes und sauerstofffreies Wasser sowie 1,5 g 1 M Salzsäure vorgelegt und unter Rühren (250 Umdrehungen pro Minute) 20 g Nyacol® 2040 zugegeben. Anschließend stellte man die wässrige Phase mit 1,62 g 1 M Salzsäure auf pH 2,5 ein und füllte sie mit Wasser, das mit 1 M Salzsäure auf pH 2,5 eingestellt worden war, auf 100 g auf. Danach heizte man das Reaktionsgemisch auf eine Reaktionstemperatur von 75°C auf. Der pH-Wert dieser wässrigen Phase, gemessen bei Raumtemperatur, betrug 2,5.

Parallel stellte man eine wässrige Emulsion, bestehend aus 10 g Styrol und 10 g n-Butylacrylat, 80 g entionisiertem und sauerstofffreiem Wasser sowie 0,2 g N-Cetyl-N,N,N-trimethylammoniumbromid her (Zulauf 1). Eine Initiatorlösung wurde aus 0,45 g Ammoniumperoxodisulfat und 44,55 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 11,3 Gew.-%, bezogen auf das Gesamtgewicht der wässrigen Kompositpartikeldispersion, auf. Mittels transmissionselektronenmikroskopische Untersuchungen wurden himbeerförmige Kompositpartikel mit einem Durchmesser von etwa 180 bis 300 nm nachgewiesen. Freie Siliziumdioxidteilchen ließen sich praktisch nicht nachweisen.

### 3.2 Herstellen des porösen anorganischen Festkörpers

8 g der unter Punkt 3.1 erhaltenen wässrigen Dispersion wurden in eine Polyethylenschale mit einem Durchmesser von etwa 5 cm gegossen. Die Naßschichtdicke betrug ca. 4 mm. Die wässrige Kompositpartikeldispersion trocknete man 24 Stunden bei 20°C und einer relativen Luftfeuchtigkeit von 50 %. Dabei wurde ein zusammenhängender Film erhalten. Die Mindestfilmbildetemperatur wurde zu 15°C bestimmt.

Von diesem Film wurde ein ca. 10 mg schweres Stück herausgeschnitten und mittels einer Apparatur, bestehend aus einem Mettler® TA 4000 System mit einer M3-Waage, thermogravimetrisch untersucht. Dabei erhitzte man die Probe mit einer Heizrate von 10°C/min unter Stickstoff von 20°C auf 550°C und unter Luftatmosphäre weiter auf 900°C. Das Polymer zersetzte sich ab einer Temperatur von ca. 410°C, wobei die Probe 67,7 Gew.-% ihres ursprünglichen Gewichts verlor. Ein zweiter Gewichtsverlust von 2,5 Gew.-%, ebenfalls bezogen auf das urspüngliche Probengewicht, trat ab ca. 560°C nach der Zufuhr von Luft in die Probenkammer auf. Der Gesamtgewichtsverlust in Höhe von 70,2 Gew.-% entspricht in guter Annäherung dem theoretischen Copolymerisatanteil vom 70 Gew.-% der Kompositpartikel. Nach dem Abkühlen wurde ein weißer anorganischer Festkörper erhalten.

In einem weiteren Versuch wurde aus dem oben erhaltenen Film ein rechteckiges Stück von 3 cm Länge und 2 cm Breite herausgeschnitten. In einem temperaturkontrollierten Ofen wurde dieses Filmstück in einer Luftatmosphäre innerhalb von 2 Stunden von 20°C auf 600°C aufgeheizt und eine Stunde bei dieser Temperatur belassen. Nach Abkühlung auf Raumtemperatur erhielt man einen rechteckigen weißen porösen Körper, dessen Kantenlängen ca. 2,7 cm und 1,8 cm betrugen.

### 4. Beispiel

### 4.1 Herstellen einer wässrigen Kompositpartikeldispersion

In einem 500 ml Vierhalskolben, ausgerüstet mit einem Rückflußkühler, einem Thermometer, einem mechanischem Rührer sowie einer Dosiervorrichtung, wurden unter Stickstoffatmosphäre bei 20°C und 1 bar (absolut) 46,7 g entionisiertes und sauerstofffreies Wasser sowie ca. 0,02 g 1 M Natronlauge vorgelegt und unter Rühren (250 Umdrehungen pro Minute) 53,3 g Nyacol® SN 15 (mit einem Zinn-(IV)-oxidfeststoffgehalt von 15 Gew.-%) zugegeben. Anschließend heizte man das Reaktionsgemisch auf eine Reaktionstemperatur von 85°C auf. Der pH-Wert dieser wässrigen Phase, gemessen bei Raumtemperatur, betrug 10.

Parallel stellte man eine wässrige Emulsion, bestehend aus 10 g Styrol und 10 g n-Butylacrylat, 1,5 g 1 M Salzsäure, 78,5 g entionisiertem und sauerstofffreiem Wasser sowie 0,4 N-Cetyl-N,N,N-trimethylammoniumbromid her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so zugängliche Kompositpartikeldispersion wies einen Feststoffgehalt von 11,5 Gew.-%, bezogen auf das Gesamtgewicht der wässrigen Kompositpartikeldispersion, auf. Transmissionselektronenmikroskopische Messungen belegen das Vorliegen von himbeerförmigen Kompositpartikeln mit einem Durchmesser von etwa 130 nm. Freie Zinndioxidteilchen waren praktisch nicht nachweisbar.

### 4.2 Herstellen des porösen anorganischen Festkörpers

8 g der unter Punkt 4.1 erhaltenen wässrigen Dispersion wurden in eine Polyethylenschale mit einem Durchmesser von etwa 5 cm gegossen. Die Naßschichtdicke betrug ca. 4 mm. Die wässrige Kompositpartikeldispersion trocknete man 24 Stunden bei 20°C und einer relativen Luftfeuchtigkeit von 50 %. Dabei wurde ein zusammenhängender Film erhalten. Die Mindestfilmbildetemperatur wurde zu 15°C bestimmt.

Aus dem erhaltenen Film wurde ein rechteckiges Stück von 3 cm Länge und 2 cm Breite herausgeschnitten. In einem temperaturkontrollierten Ofen wurde dieses Filmstück in einer Luftatmosphäre innerhalb von 2 Stunden von 20°C auf 600°C aufgeheizt und eine Stunde bei dieser Temperatur belassen. Nach Abkühlung auf Raumtemperatur erhielt man einen rechteckigen weißen porösen Körper, dessen Kantenlängen ca. 2,7 cm und 1,8 cm betrugen.

### 5. Beispiel

### 5.1 Herstellen einer wässrigen Kompositpartikeldispersion

In einem 500 ml Vierhalskolben, ausgerüstet mit einem Rückflußkühler, einem Thermometer, einem mechanischem Rührer sowie einer Dosiervorrichtung, wurden unter Stickstoffatmosphäre bei 20°C und 1 bar (absolut) 66 g entionisiertes und sauerstofffreies Wasser sowie 1,5 g 1 M Salzsäure vorgelegt und unter Rühren (250 Umdrehungen pro Minute) 13,3 g Nyacol® 2040 zugegeben. Anschließend stellte man die wässrige Phase mit 1,5 g 1 M Salzsäure auf pH 2,5 ein und füllte sie mit Wasser, das mit 1 M Salzsäure auf pH 2,5 eingestellt worden war, auf 100 g auf. Danach heizte man das Reaktionsgemisch auf eine Reaktionstemperatur von 85°C auf. Der pH-Wert dieser wässrigen Phase, gemessen bei Raumtemperatur, betrug 2,5.

Parallel stellte man eine wässrige Emulsion, bestehend aus 10 g Styrol und 10 g n-Butylacrylat, 80 g entionisiertem und sauerstofffreiem Wasser sowie 0,2 g N-Cetyl-N,N,N-trimethylammoniumbromid her (Zulauf 1). Eine Initiatorlösung wurde aus 0,45 g Natriumperoxodisulfat und 44,55 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 11,5 Gew.-%, bezogen auf das Gesamtgewicht der wässrigen Kompositpartikeldispersion, auf. Mittels transmissionselektronenmikroskopische Untersuchungen wurden himbeerförmige Kompositpartikel mit einem Durchmesser von etwa 250 bis 850 nm nachgewiesen. Freie Siliziumdioxidteilchen ließen sich praktisch nicht nachweisen.

### 5.2 Herstellen des porösen anorganischen Festkörpers

8 g der unter Punkt 5.1 erhaltenen wässrigen Dispersion wurden in eine Polyethylenschale mit einem Durchmesser von etwa 5 cm gegossen. Die Naßschichtdicke betrug ca. 4 mm. Die wässrige Kompositpartikeldispersion trocknete man 24 Stunden bei 20°C und einer relativen Luftfeuchtigkeit von 50 %. Dabei wurde ein zusammenhängender Film erhalten. Die Mindestfilmbildetemperatur wurde zu 6°C bestimmt.

Aus dem oben erhaltenen Film wurde ein rechteckiges Stück von 3 cm Länge und 2 cm Breite herausgeschnitten. In einem temperaturkontrollierten Ofen wurde dieses Filmstück in einer Luftatmosphäre innerhalb von 2 Stunden von 20°C auf 600°C aufgeheizt und eine Stunde bei dieser Temperatur belassen. Nach Abkühlung auf Raumtemperatur erhielt man einen rechteckigen weißen porösen Körper, dessen Kantenlängen ca. 2,7 cm und 1,8 cm betrugen.

## Patentansprüche

1. Verfahren zur Herstellung von porösen anorganischen Festkörpern aus einer wässrigen Dispersion von Partikeln, welche aus Polymerisat und feinteiligem anorganischen Feststoff aufgebaut sind, **dadurch gekennzeichnet, daß**
a) die wässrige Dispersion in eine offene Form gefüllt oder auf eine Fläche aufgebracht wird, anschließend
b) die wässrige Dispersion bei einer Temperatur gleich oder größer ihrer Mindestfilmbildetemperatur getrocknet wird und anschließend
c) der gebildete Film aus Polymerisat und anorganischem Feststoff auf erhöhte Temperatur gebracht und das Polymerisat zu gasförmigen Bestandteilen umgesetzt wird.

2. Verfahren nach Anspruch 1, **dadurch gekennzeichnet, daß** der feinteilige anorganische Feststoff ausgewählt ist aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid.

3. Verfahren nach einem der Ansprüche 1 und 2, **dadurch gekennzeichnet, daß** der gewichtsmittlere Durchmesser des feinteiligen anorganischen Feststoffs ≤ 100 nm ist.

4. Verfahren nach einem der Ansprüche 1 bis 3, **dadurch gekennzeichnet, daß** das Polymerisat zu wenigstens 50 Gew.-% aus wenigstens einem Monomeren der folgenden Gruppe in einpolymerisierter Form aufgebaut ist: Ester aus Vinylalkohol und 1 bis 10 C-Atome aufweisenden Monocarbonsäuren, Ester aus Acrylsäure, Methacrylsäure, Maleinsäure oder Fumarsäure mit einem 1 bis 10 C-Atome aufweisenden Alkohol, vinylaromatisches Monomer und/oder ein α,β-ungesättigtes C₃- oder C₄-Carbonsäurenitril oder ein α,β-ungesättigtes C₄- bis C₆-Carbonsäuredinitril.

5. Verfahren nach einem der Ansprüche 1 bis 4, **dadurch gekennzeichnet, daß** der transmissionselektronenemikroskopisch bestimmte Durchmesser der aus Polymerisat und feinteiligem anorganischen Feststoff aufgebauten Partikel ≥ 50 und ≤ 1500 nm ist.

6. Verfahren nach einem der Ansprüche 1 bis 5, **dadurch gekennzeichnet, daß** die Mindestfilmbildetemperatur der wässrigen Dispersion < 100°C ist.

7. Verfahren nach einem der Ansprüche 1 bis 6, **dadurch gekennzeichnet, daß** die Mindestfilmbildetemperatur der wässrigen Dispersion ≥ -60 und ≤ 30°C ist.

8. Verfahren nach einem der Ansprüche 1 bis 7, **dadurch gekennzeichnet, daß** der Film auf eine Temperatur ≤ 1000°C erhitzt wird.

9. Verfahren nach einem der Ansprüche 1 bis 8, **dadurch gekennzeichnet, daß** der Film auf eine Temperatur ≥ 350 und ≤ 700°C erhitzt wird.

10. Verfahren nach einem der Ansprüche 1 bis 9, **dadurch gekennzeichnet, daß** der Film mit einer Heizrate ≥ 0,1 und ≤ 50°C/min erhitzt wird.

11. Verfahren nach einem der Ansprüche 1 bis 10, **dadurch gekennzeichnet, daß** der Film in einer Inertgasatmosphäre erhitzt wird.

12. Verfahren nach einem der Ansprüche 1 bis 10, **dadurch gekennzeichnet, daß** der Film in einer sauerstoffhaltigen Atmosphäre erhitzt wird.

13. Verfahren nach Anspruch 12, **dadurch gekennzeichnet, daß** die sauerstoffhaltige Atmosphäre Luft ist.

14. Verfahren nach Anspruch 12, **dadurch gekennzeichnet, daß** die sauerstoffhaltige Atmosphäre Sauerstoff ist.

15. Poröse anorganische Festkörper, erhältlich nach einem Verfahren gemäß einem der Ansprüche 1 bis 14.

16. Verwendung von porösen anorganischen Festkörpern gemäß Anspruch 15 als Katalysatorträger.

17. Verwendung von porösen anorganischen Festkörpern gemäß Anspruch 15 als Membran.

18. Verwendung von porösen anorganischen Festkörpern gemäß Anspruch 15 als Adsorbens.

19. Verwendung von porösen anorganischen Festkörpern gemäß Anspruch 15 als wärmedämmendes Material.

20. Verwendung von porösen anorganischen Festkörpern gemäß Anspruch 15 als schalldämmendes Material.

21. Verwendung von porösen anorganischen Festkörpern gemäß Anspruch 15 als leichter Konstruktionswerkstoff.

22. Verwendung von porösen anorganischen Festkörpern gemäß Anspruch 15 als Trägermaterial für die Chromatographie.

## Claims

1. A process for the preparation of porous inorganic solid bodies from an aqueous dispersion of particles composed of polymer and finely divided inorganic solid matter, wherein
a) the aqueous dispersion is poured into an open mold or is applied to a surface, after which
b) the aqueous dispersion is dried at a temperature equal to or greater than its minimum film-forming temperature, after which
c) the resulting film of polymer and inorganic solid matter is heated to an elevated temperature and the polymer is converted to gaseous constituents.

2. A process as defined in claim 1, wherein the finely divided inorganic solid matter is selected from the group comprising silicon dioxide, aluminum oxide, tin(IV) oxide, yttrium(III) oxide, cerium(IV) oxide, hydroxyaluminum oxide, calcium carbonate, magnesium carbonate, calcium orthophosphate, magnesium orthophosphate, calcium metaphospate, magnesium metaphosphate, calcium pyrophosphate, magnesium pyrophosphate, iron(II) oxide, iron(III) oxide, iron(II/III) oxide, titanium dioxide, hydroxylapatite, zinc oxide and zinc sulfide.

3. A process as defined in any of claims 1 and 2, wherein the weight-average diameter of the finely divided inorganic solid matter is ≤100 nm.

4. A process as defined in any of claims 1 to 3, wherein the polymer is composed, to an extent of at least 50 wt %, of at least one monomer of the following group, in the form of polymerized units: esters of vinyl alcohol and monocarboxylic acids having from 1 to 10 carbon atoms, esters of acrylic acid, methacrylic acid, maleic acid or fumaric acid with an alcohol, vinylaromatic monomer having from 1 to 10 carbon atoms and/or an α,β-unsaturated C₃ or C₄ carboxynitrile or an α,β-unsaturated C₄-C₆ carboxydinitrile.

5. A process as defined in any of claims 1 to 4, wherein the diameter of the particles composed of polymer and finely divided inorganic solid matter is ≥50 and ≤1500 nm, as determined by transmission electron microscopic investigation.

6. A process as defined in any of claims 1 to 5, wherein the minimum film-forming temperature of the aqueous dispersion is <100°C.

7. A process as defined in any of claims 1 to 6, wherein the minimum film-forming temperature of the aqueous dispersion is ≥-60°C and ≤30°C.

8. A process as defined in any of claims 1 to 7, wherein the film is heated to a temperature of ≤1000°C.

9. A process as defined in any of claims 1 to 8, wherein the film is heated to a temperature of ≥350°C and ≤700°C.

10. A process as defined in any of claims 1 to 9, wherein the film is heated at a rate of ≥0.1°C/min and ≤50°C/min.

11. A process as defined in any of claims 1 to 10, wherein the film is heated in an inert gas atmosphere.

12. A process as defined in any of claims 1 to 10, wherein the film is heated in an oxygen-containing atmosphere.

13. A process as defined in claim 12, wherein the oxygen-containing atmosphere is air.

14. A process as defined in claim 12, wherein the oxygen-containing atmosphere is oxygen.

15. A porous inorganic solid body obtainable by a process as defined in any of claims 1 to 14.

16. The use of a porous inorganic solid body as defined in claim 15 as a catalyst support.

17. The use of a porous inorganic solid body as defined in claim 15 as a membrane.

18. The use of a porous inorganic solid body as defined in claim 15 as an adsorbent.

19. The use of a porous inorganic solid body as defined in claim 15 as heat-insulating material.

20. The use of a porous inorganic solid body as defined in claim 15 as sound-proofing material.

21. The use of a porous inorganic solid body as defined in claim 15 as light-weight building material.

22. The use of a porous inorganic solid body as defined in claim 15 as a partitioning support for use in chromatography.

## Revendications

1. Procédé de préparation de corps solides poreux inorganiques à partir d'une dispersion aqueuse de particules constituées d'un polymère et d'un solide inorganique finement divisé, **caractérisé en ce que**
a) la dispersion aqueuse est introduite dans un moule ouvert ou appliquée sur une surface, ensuite
b) la dispersion aqueuse est séchée à une température égale ou supérieure à sa température minimale de formation de film et ensuite
c) le fil formé à partir du polymère et du solide inorganique est chauffé à une température supérieure et le polymère est converti en constituants gazeux.

2. Procédé selon la revendication 1, **caractérisé en ce que** le solide inorganique finement divisé est choisi dans le groupe comprenant le dioxyde de silicium, l'oxyde d'aluminium, l'oxyde d'étain(IV), l'oxyde d'yttrium(IV), l'oxyde de cérium(IV), l'hydroxyde d'aluminium, le carbonate de calcium, le carbonate de magnésium, l'orthophosphate de calcium, l'orthophosphate de magnésium, le métaphosphate de calcium, le métaphosphate de magnésium, le pyrophosphate de calcium, le pyrophosphate de magnésium, l'oxyde de fer(II), l'oxyde de fer(III), l'oxyde de fer(II/III), le dioxyde de titane, l'hydroxylapatite, l'oxyde de zinc et le sulfure de zinc.

3. Procédé selon l'une quelconque des revendications 1 et 2, **caractérisé en ce que** la moyenne pondérale de diamètre du solide inorganique finement divisé est ≤ 100 nm.

4. Procédé selon l'une quelconque de revendications 1 à 3, **caractérisé en ce que** le polymère est constitué à raison d'au moins 50% en poids d'au moins un monomère des groupes suivants sous forme copolymérisée: des esters d'alcool vinylique et d'acides monocarboxyliques présentant de 1 à 10 atomes de C, des esters d'acide acrylique, d'acide méthacrylique, d'acide maléique ou d'acide fumarique avec un alcool présentant de 1 à 10 atomes de C, un monomère vinylaromatique et/ou un nitrile d'acide carboxylique en C₃ ou C₄ α,β-éthyléniquement insaturé ou un dinitrile d'acide dicarboxylique en C₄ à C₆ αβ-éthyléniquement insaturé.

5. Procédé selon l'une quelconque des revendications 1 à 4, **caractérisé en ce que** le diamètre, déterminé au microscope électronique à transmission, des particules constituées de polymère et de solide inorganique finement divisé est ≥ 50 et ≤ 1500 nm.

6. Procédé selon l'une quelconque des revendications 1 à 5, **caractérisé en ce que** la température minimale de formation de film de la dispersion aqueuse est <100°C.

7. Procédé selon l'une quelconque des revendications 1 à 6, **caractérisé en ce que** la température minimale de formation de film de la dispersion aqueuse est ≥ -60 et ≤ 30°C.

8. Procédé selon l'une quelconque des revendications 1 à 7, **caractérisé en ce que** le film est chauffé à une température ≤ 1000°C.

9. Procédé selon l'une quelconque des revendications 7 à 8, **caractérisé en ce que** le film est chauffé à une température ≥ 350 et ≤ 700°C.

10. Procédé selon l'une quelconque des revendications 1 à 9, **caractérisé en ce que** le film est chauffé avec un gradient de chauffage ≥ 0,1 et ≤ 50°C/minute.

11. Procédé selon l'une quelconque des revendications 1 à 10, **caractérisé en ce que** le film est chauffé dans une atmosphère de gaz inerte.

12. Procédé selon l'une quelconque des revendications 1 à 10, **caractérisé en ce que** le film est chauffé dans une atmosphère contenant de l'oxygène.

13. Procédé selon la revendication 12, **caractérisé en ce que** l'atmosphère contenant de l'hydrogène est de l'air.

14. Procédé selon la revendication 12, **caractérisé en ce que** l'atmosphère contenant de l'oxygène est de l'oxygène.

15. Corps solides poreux inorganiques que l'on peut obtenir par un procédé selon l'une quelconque des revendications 1 à 14.

16. Utilisation de corps solides poreux inorganiques selon la revendication 15 en tant que supports de catalyseurs.

17. Utilisation de corps solides poreux inorganiques selon la revendication 15 en tant que membranes.

18. Utilisation de corps solides poreux inorganiques selon la revendication 15 en tant qu'adsorbants.

19. Utilisation dé corps solides poreux inorganiques selon la revendication 15 en tant que matériaux d'isolation thermique.

20. Utilisation de corps solides poreux inorganiques selon la revendication 15 en tant que matériaux d'isolation acoustique.

21. Utilisation de corps solides poreux inorganiques selon la revendication 15 en tant que matériaux de construction légers.

22. Utilisation de corps solides poreux inorganiques selon la revendication 15 en tant que matériaux de supports pour chromatographie.
